# EUROPÄISCHE PATENTSCHRIFT

(11) **EP 2 543 700 B1**
(45) Veröffentlichungstag und Bekanntmachung des Hinweises auf die Patenterteilung: **08.08.2018**
(21) Anmeldenummer: 12172611.1
(22) Anmeldetag: 19.06.2012
(51) Int. Cl.: B29C 64/153, C09C 3/10, C08J 5/00, B29C 67/04, C08K 9/08

(54) **Pulver enthaltend mit Polymer beschichtete Partikel**
Powder containing particles coated with polymer
Poudre contenant des particules revêtues de polymère

(30) Priorität: 06.07.2011 DE 102011078719
(43) Veröffentlichungstag der Anmeldung: 09.01.2013
(73) Patentinhaber: Evonik Degussa GmbH, 45128 Essen (DE)
(72) Erfinder: Monsheimer, Sylvia, 45721 Haltern am See (DE); Diekmann, Wolfgang, 45731 Waltrop (DE); Baumann, Franz-Erich, 48249 Dülmen (DE); Hessel-Geldmann, Sigrid, 45721 Haltern am See (DE); Warnke, Kristiane, 45665 Recklinghausen (DE); Stemmer, Heike, 45721 Haltern am See (DE); Altkemper, Stefan, 46282 Dorsten (DE)

(56) Entgegenhaltungen:
- EP-A1- 1 982 816

## Beschreibung

Die Erfindung betrifft ein Pulver auf Basis von mit Polymeren beschichteten Füllstoffen, die Vorteile hinsichtlich der Stabilität des Herstellprozesses und der Dichte aufweist, die Verwendung dieses Pulvers in formgebenden Verfahren, sowie Formkörper, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden. Die erfindungsgemäßen Formteile zeigen außerdem weniger Neigung zum Verzug als herkömmliche Formteile.

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird eingehend in den Patentschriften US 6 136 948 und WO 96/06881 beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90% aufweist, ein zahlenmäßiges Mittel des Molekulargewichts Mn von 30 000 bis 500 000 hat und dessen Quotient Mw/Mn im Bereich von 1 bis 5 liegt.

Die DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

DE 10 2004 003 485 beschreibt die Verwendung von Partikeln mit zumindest einer Kavität zur Verwendung in schichtaufbauenden Verfahren, Dabei enthalten alle Partikel zumindest eine Kavität, und die die Kavität enthaltenden Partikeln werden durch den Eintrag elektromagnetischer Energie aufgeschmolzen.

Die oben beschriebenen Pulver werden im Stand der Technik gelegentlich zur Verstärkung mit Glaskugeln vermischt. Nachteilig ist hierbei jedoch, dass es bei der Handhabung solcher Pulvermischungen oft zu Entmischungsphänomenen kommt, so dass eine Konstanz der mechanischen Eigenschaften, die mit dem Verstärkungsstoff erreicht werden soll, nicht immer gegeben ist. Die Bereiche, in denen der Anteil an Glaskugeln zu hoch ist, werden sehr spröde und damit unbrauchbar, die Bereiche, in denen zu wenige Glaskugeln enthalten sind, sind weicher als geplant. Die Entmischung beruht auf der unterschiedlichen Dichte der Polymerpartikel und der Glaskugeln und ist tendenziell bei jedem Transport und der Handhabung der Pulvermischung mehr oder weniger evident. Insbesondere wenn im Rapid Manufacturing die Handhabung des Pulvers automatisiert wird, entstehen schwer kontrollierbar abweichende Eigenschaften an den produzierten Bauteilen.

Zur Ausräumung dieser Nachteile wird in der DE 10 2007 019 133 A1 ein Komposit-Pulver vorgeschlagen zur Verwendung in einem schichtweise arbeitenden Verfahren, bei dem selektiv Bereiche der jeweiligen Pulverschicht durch den Eintrag elektromagnetischer Energie aufgeschmolzen werden, wobei das Pulver zumindest ein Polymerpulver und Blähglaspartikel aufweist. Auch hierbei handelt es sich um ein Gemisch aus Polymerpulver und Blähglaspartikeln (Dry Blend-Mischung). Es wurde festgestellt, dass Blähglaskugeln bzw. -partikel geringe Entmischungsneigung aufgrund geringerer Dichteunterschiede haben. Ein Nachteil der Blähglaskugeln bzw. -partikel sind jedoch schlechte mechanische Eigenschaften, was sich im Bauteil ebenfalls zeigt.

Aufgabe der vorliegenden Erfindung war es das Problem des Entmischungsphänomens weitergehend auszuräumen und eine Verbesserung bei der Konstanz der mechanischen Eigenschaften im Formkörper zu erzielen, die mit dem Verstärkungsstoff erreicht werden sollen.

Die technische Aufgabe wurde gelöst durch ein Pulver zur Verwendung in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, enthaltend Verbundpartikel, die von ganz oder teilweise mit einem gefällten Polymer beschichten Glaspartikeln dargestellt werden, wobei die Glaspartikel einen mittleren Korndurchmesser d₅₀ von 3 bis 100 µm aufweisen. Dabei weisen die Glaspartikel mindestens in einer Raumrichtung einen mittleren Korndurchmesser d₅₀ von größer 3 µm auf. Damit sind je Raumrichtung unterschiedliche Abmessungen möglich. Bevorzugt weisen die Glaspartikel in allen drei Raumrichtungen einen mittleren Korndurchmesser d₅₀ von 3 bis 100 µm auf. Die Angabe der Korndurchmesser der Glaspartikel bezieht sich hierbei auf die Glaspartikel, die im zu bildenden Verbundpartikel den Kern darstellen.

Bei dem schichtweise arbeitenden Verfahren zur Herstellung von Formkörpern handelt es sich vorzugsweise um selektives Laser-Sintern.

Das Pulver gemäß der vorliegenden Erfindung unterliegt aufgrund der festen Verbindung zwischen Polymer und Füllstoff grundsätzlich nicht mehr der Problematik der Entmischung, was zu einer Verbesserung bei der Konstanz der mechanischen Eigenschaften im aus dem Pulver erzeugten Formkörper führt. Da bei dem erfindungsgemäßen Pulver keine Entmischung mehr auftritt, können aus diesem Pulver im Aufbau gleichmäßige Bauteile und Bauteile mit gleichmäßiger Qualität hergestellt werden. Aufgrund der dauerhaft gleichmäßigen Zusammensetzung durch den festen Verbund von Polymer und Glaspartikel ist die Recyclebarkeit des Pulvers auch über mehrere Stufen wesentlich verbessert. Auch bei dem Einsatz der erfindungsgemäßen Pulver gibt es Vorteile. So lassen sich die erfindungsgemäßen Pulver in größeren Verpackungseinheiten lagern, transportieren und einsetzen, ohne dass eine Entmischung auftreten kann. Bei der Durchführung des Laser-Sinter-Verfahrens lassen sich somit auch größere Produktvorlagen realisieren, das heißt, in den Probenvorratsbehälter kann mehr Pulver eingefüllt werden, bzw. der Probenvorratsbehälter kann größer dimensioniert sein, ohne dass die Qualität der erhaltenen Bauteile dadurch negativ beeinflusst wird. Weiterhin führt auch eine Fluidisierung in der Vorlage nicht zu einer Entmischung wie sie häufiger bei Systemen aus dem Stand der Technik beobachtet wird. Da die Pulver der vorliegenden Erfindung eine äußere Hülle aus Polymer aufweisen, ist auch der Energieeintrag durch den Laser gleichmäßiger. Bei Pulvern aus dem Stand der Technik trifft der Laser mal auf ein Polymerpartikel und mal auf einen Füllstoffpartikel. Je nach Füllstofftyp kann im Extremfall eine fast vollständige Absorption bis hin zu einer fast vollständigen Reflektion der Energie erfolgen. Diese Problematik wird bei Pulvern gemäß der vorliegenden Erfindung in vorteilhafter Weise umgangen.

Überraschenderweise wurde nun gefunden, dass sich durch die Verwendung von Glaspartikeln als Verstärkungsstoff, die fest mit Polymer verbunden sind (Verbundpartikel), Formkörper durch ein schichtweise arbeitendes Verfahren (bei welchem selektiv Bereiche der jeweiligen Pulverschicht aufgeschmolzen werden), produzieren lassen, die Vorteile bezüglich der Verzugsneigung aufweisen und dabei bessere Eigenschaften bezüglich der Konstanz der Verarbeitung aufweisen als solche aus einem verstärkten Polymerpulver des Standes der Technik.

In einer bevorzugten Ausführungsform sind die Glaspartikel ausgewählt aus Vollglaskugeln, Hohlglaskugeln, porösen Glaskugeln, Blähglaspartikeln. Die jeweiligen Glaspartikel können in folgenden Formen ausgebildet sein: kugelförmig, plättchenförmig oder länglich. Darüber hinaus können die jeweiligen Glaspartikel scharfkantig, abgerundet oder glatt sein. Die genannten Glaspartikel können vor Auftrag des zu fällenden Polymers gegebenenfalls zusätzlich mit Schlichtemitteln beschichtet sein. Als Schlichtemittel können alle im Stand der Technik bekannten Substanzen verwendet werden, vorzugsweise werden Aminosilane, Methacryloxypropyltrimethoxysilan, Glycidyloxyprpyltrimethoxysilan oder Aminopropyltriethoxysilan eingesetzt.

In einer weiteren bevorzugten Ausführungsform ist die Glasart der Glaspartikel ausgewählt aus der Gruppe Quarzglas, Kalk-Natron-Glas, Kalk-Natron-Silikatglas, Floatglas, Bleikristallglas, Borosilikatglas, E-Glas, A-Glas, E-CR-Glas, C-Glas, D-Glas, R-Glas, S-Glas, AR-Glas, Email, Chalkogenidglas 1, Chalkogenidglas 2. Besonders bevorzugt sind E-Glas (für Glasfasern) und Floatglas.

E-Glas ist ein Alumo-Borosilikatglas mit einem Boroxydanteil von 7 bis 15 Gew.-% und einem Alkalianteil unter 2 Gew.-% oder ein Alumo-Silikatglas, das Boroxyd von 0 bis 10 Gew.-% enthalten kann sowie einen Alkalianteil unter 2 Gew.-%.

In bevorzugter weise wird ein Glas mit der folgenden Zusammensetzung für die Glaspartikel verwendet SiO₂: 70-73 Gew.-%; Al₂O₃: 1,0-2,0 Gew.-%; Na₂O: 12,0-14,0 Gew.-%; CaO: 8,0-12,0 Gew.-% und MgO: 0-5,0 Gew.-%.

Weiterhin ist bevorzugt, dass die Glaspartikel ein Aspektverhältnis (d.h. ein Verhältnis von Länge zu Breite) von 20 oder weniger, vorzugsweise von 15 oder weniger, weiter bevorzugt von 10 oder weniger, noch weiter bevorzugt von 8 oder weniger, weiterhin bevorzugt von 5 oder weniger, besonders bevorzugt von 4 oder weniger, weiterhin besonders bevorzugt von 3 oder weniger, insbesondere bevorzugt von 2 oder weniger, weiter bevorzugt von 1,5 oder weniger und ganz besonders bevorzugt von 1,2 oder weniger aufweisen.

Bei dem fällbaren bzw. gefällten Polymer handelt es sich um ein Polymer, das sich in einem flüssigen Medium enthaltend ein Lösungsmittel lösen lässt, und durch Änderungen von bestimmten Parametern, wie z.B. Temperatur, Druck, Gehalt an Lösungsmittel, Nichtlöser, anti-Lösungsmittel, Fällungsmittel, als vollständig oder teilweise unlöslicher Niederschlag in Form von Flocken, Tröpfchen oder in kristalliner Form ausfällt. Die Art des Lösungsmittels und der Gehalt an Lösungsmittel, sowie die weiteren Parameter, um das entsprechende Polymer zu lösen oder zu fällen, hängen dabei vom Polymer ab. Der Fachmann kann durch geeignete Versuche Lösungsmittel, sowie Löse- und Fällbedingungen ermitteln.

Das fällbare bzw. gefällte Polymer ist vorzugsweise ausgewählt aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouride (PVDF), lonomer, Polyetherketonen, Polyaryletherketonen, Polyamid, Copolyamid oder Mischungen daraus, insbesondere Mischungen aus Homo- und Copolyamid.

In einer weiteren Ausführungsform wird das Polymer zur Beschichtung der Glaspartikel durch gemeinsame Fällung zumindest eines Polyamids des AB-Types und zumindest eines Polyamid des AABB-Types erhalten. Dabei sind cogefällte Polyamide bevorzugt, wobei zumindest Polyamid 11 oder Polyamid 12 und zumindest ein Polyamid auf der Basis von PA1010, PA1012, PA1212 oder PA1013 enthalten ist.

So lassen sich Polyolefine und Polyethylen beispielsweise in Toluol, Xylol bzw. 1,2,4-Trichlorbenzol lösen. Polypropylen lässt sich beispielsweise in Toluol bzw. Xylol lösen. Polyvinylchlorid lässt sich beispielsweise in Aceton lösen. Polyacetal lässt sich beispielsweise in DMF, DMAc bzw. NMP lösen. Polystyrol lässt sich beispielsweise in Toluol lösen. Polyimide lassen sich beispielsweise in NMP lösen. Polysulfone lassen sich beispielsweise in Sulfolan lösen. Poly-(N-methylmethacrylimide) (PMMI) lassen sich beispielsweise in DMAc bzw. NMP lösen. Polymethylmethacrylat (PMMA) lässt sich beispielsweise in Aceton lösen. Polyvinylidenfluoride lassen sich in N-Methylpyrrolidon (NMP), Dimethylformamid (DMF), Dimethylacetamid (DMAc) bzw. Cyclohexanon lösen. Polyetherketone und Polyaryletherketone lassen sich beispielsweise in Diphenylsulfon bzw. in Sulfolan lösen. Polyamide lassen sich in einem alkoholischen Medium lösen, vorzugsweise einem Ethanol-Wasser-Gemisch lösen. Wie oben erläutert müssen ggf. auch Parameter wie z.B. Temperatur und Druck eingestellt werden, um ein gegebenes Polymer zu lösen, was dem Fachmann ohne weiteres möglich ist.

Nach dem Lösen des betreffenden Polymers wird dieses in Gegenwart der Glaspartikel ausgefällt, um die Glaspartikel mit dem betreffenden ausgefällten Polymer ganz oder teilweise zu beschichten. Die Fällung des Polymers kann durch Änderung des Druckes, Änderung der Temperatur, Änderung (Verringerung) der Konzentration des Lösungsmittels, und ggf. Zugabe eines Nichtlösers, anti-Lösungsmittels bzw. Fällungsmittels initiiert bzw. beschleunigt werden. Bei amorphen Polymeren, wie Polystyrol, Polysulfone, PMMI, PMMA, lonomer ist der Zusatz eines Nichtlösers zur Fällung des betreffenden Polymers erforderlich.

Das fällbare Polymer ist vorzugsweise ein Polyamid, welches pro Carbonamid-Gruppe zumindest 8 Kohlenstoffatome aufweist. Besonders bevorzugt ist das Polymer ein Polyamid, welches 10 oder mehr Kohlenstoffatome pro Carbonamid-Gruppe aufweist. Ganz besonders bevorzugt ist das Polymer ein Polyamid, ausgewählt aus Polyamid 612 (PA 612), Polyamid 11 (PA 11) und Polyamid 12 (PA 12). Der Prozess für die Herstellung für die in den erfindungsgemäßen Sinterpulver einsetzbaren Polyamiden ist allgemein bekannt und kann für die Herstellung von PA 12 z. B. den Schriften DE 29 06 647, DE 35 10 687, DE 35 10 691 und DE 44 21 454 entnommen werden. Das benötigte Polyamidgranulat kann von verschiedenen Herstellern bezogen werden, beispielsweise wird Polyamid 12 Granulat von der Evonik Industries AG unter dem Handelsnamen VESTAMID angeboten.

Besonders bevorzugt handelt es sich bei dem fällbaren Polymer um Polyamid 12.

Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin(1,5), Octamethylendiamin(1, 8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,4 und 2,4 (gemessen in 0,5%iger m-Kresollösung bei 25°C nach DIN 53 727), bevorzugt zwischen 1,50 und 2,1, weiter bevorzugt zwischen 1,6 und 1,85 besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt.. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

In einer weiteren bevorzugten Ausführungsform weisen die Glaspartikel (Glaskern des Verbundpartikels) einen mittleren Korndurchmesser d₅₀ von 3 bis 80 µm, vorzugsweise von 3 bis 70 µm und weiter bevorzugt von 3 bis 60 µm auf. Weiterhin können Glaspartikel verwendet werden mit einem mittleren Korndurchmesser von 20 bis 80 µm, vorzugsweise von 20 bis 70 µm und weiter bevorzugt von 20 bis 60 µm. Geeignete Partikelgrößenverteilungen können durch bekannte Verfahren, z.B. Sieben, Sichten, gewährleistet werden. Weiterhin kann auch eine Nachbehandlung in einem Mischer mit starker Scherung, bevorzugt bei Temperaturen oberhalb des Glaspunktes des jeweiligen Polymeren, erfolgen, um das Korn abzurunden und damit die Rieselfähigkeit zu verbessern.

Weiterhin ist bevorzugt, dass die Verbundpartikel einen mittleren Korndurchmesser d₅₀ von 20 bis 150 µm, vorzugsweise von 20 bis 120 µm, bevorzugt von 20 bis 100 µm, weiter bevorzugt von 25 bis 80 µm und besonders bevorzugt von 25 bis 70 µm aufweisen.

Das gewichtsbezogene Verhältnis des Polymers zu den Glaspartikeln bezogen auf die Gesamtheit der Verbundpartikel beträgt vorzugsweise 0,1 bis 30, bevorzugt 1,0 bis 10,0 und weiter bevorzugt von 1,4 bis 5,0. Dabei ist die Dichte zu beachten.

In einer bevorzugten Ausführungsform beträgt die Dichte der Glaspartikel von 0,1 bis 6,6 g/cm³, bevorzugt von 2,0 bis 6,6 g/cm³, weiter bevorzugt von 2,0 bis 3,5 g/cm³, besonders bevorzugt von 2,1 bis 2,7 g/cm³ und am meisten bevorzugt von 2,2 bis 2,6 g/cm³. Blähglas weist eine wesentlich geringere Dichte auf. Die Dichte von Blähglaspartikeln beträgt von 0,1-0,4 g/cm³. Die Dichte von Polyamid beträgt etwa 1,08 bis 1,24 g/cm³.

Das Verhältnis des mittleren Korndurchmessers d₅₀ der Verbundpartikel zum mittleren Korndurchmesser d₅₀ der Glaspartikel beträgt bevorzugt 1,01 bis 5,0, vorzugsweise 1,05 bis 5,0. Bevorzugt sind Partikel mit deutlicher Kern-Hülle-Struktur: daher beträgt das Verhältnis des mittleren Korndurchmessers d₅₀ der Verbundpartikel zum mittleren Korndurchmesser d₅₀ der Glaspartikel bevorzugt 1,1 bis 5,0, vorzugsweise 1,15 bis 5,0, besonders bevorzugt, 1,2 bis 5,0, weiterhin bevorzugt 1,4 bis 5,0, insbesondere bevorzugt 1,5 bis 5,0, weiter bevorzugt 1,8 bis 5,0, und ganz besonders bevorzugt 2,0 bis 5,0.

In einer weiteren bevorzugten Ausführungsform ist die Dichte der Glaspartikel größer oder nicht mehr als 20%, vorzugsweise nicht mehr als 15%, weiter bevorzugt nicht mehr als 10% und besonders bevorzugt nicht mehr als 5% geringer als die Dichte des für die Fällung des Polymers verwendeten Lösungsmittels.

Bei der Fällung des Polymers in Anwesenheit der Glaspartikel wird besonders bevorzugt ein Alkanol (beispielsweise: Methanol, Ethanol, Propanol, Butanol), bevorzugt Ethanol als Lösungsmittel verwendet, wobei die Dichte der Glaspartikel größer ist oder nicht mehr als 20%, vorzugsweise nicht mehr als 15%, weiter bevorzugt nicht mehr als 10% und besonders bevorzugt nicht mehr als 5% geringer ist als die Dichte des Alkanols, bevorzugt von Ethanol.

Das Pulver kann die genannten Verbundpartikel alleine oder zusammen mit weiteren lose dazugemischten (Dry-Blend) Füllstoffen und/oder Hilfsstoffen enthalten. Der Anteil der Verbundpartikel im Pulver beträgt mindestens 50 Gew.-%, vorzugsweise mindestens 80 Gew.-%, bevorzugt mindestens 90 Gew.-%, besonders bevorzugt mindestens 95 Gew.-% und ganz besonders bevorzugt mindestens 99 Gew.-%.

Das erfindungsgemäße Pulver kann außerdem Hilfsstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen AEROSIL®, mit unterschiedlichen Spezifikationen, durch die Evonik Industries AG angeboten. Vorzugsweise weist das erfindungsgemäße Pulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Pigmente können beispielsweise Titandioxidpartikel basierend auf Rutil (bevorzugt) oder Anatas sein oder Rußpartikel.

Zur Verbesserung der Verarbeitungsfähigkeit oder zur weiteren Modifikation des erfindungsgemäßen Pulvers können diesem anorganische Fremdpigmente, wie z.B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, zugegeben werden. Vorzugsweise wird, bezogen auf das Gesamtgewicht an Polymeren im Polymerpulver, so viel dieser Stoffe den Polymeren zugegeben, dass die für das erfindungsgemäße Pulver angegeben Konzentrationen für Hilfsstoffe eingehalten werden.

Die Eigenschaften eines Fällpulvers gemäß der vorliegenden Erfindung werden erreicht, wenn der Schmelzpunkt der polymeren Komponente beim ersten Aufheizen um mindestens 3 % größer ist als beim zweiten Aufheizen, gemessen durch Differentialscanningkalorimetrie (DSC); und wenn die Schmelzenthalpie der polymeren Komponente beim ersten Aufheizen um mindestens 50% größer ist als beim zweiten Aufheizen, gemessen durch Differentialscanningkalorimetrie (DSC).

Optimale Eigenschaften bei der Weiterverarbeitung des Pulvers werden erreicht, wenn der Schmelzpunkt der polymeren Komponente beim ersten Aufheizen um 3 bis 7% größer ist als beim zweiten Aufheizen, gemessen durch Differentialscanningkalorimetrie (DSC); und wenn die Schmelzenthalpie der polymeren Komponente beim ersten Aufheizen um mindestens 50% größer ist als beim zweiten Aufheizen, gemessen durch Differentialscanningkalorimetrie (DSC). Für das Lasersintern ist insbesondere ein Polyamid 12 geeignet, welches eine Schmelztemperatur von 185 bis 189 °C, vorzugsweise von 186 bis 188 °C, eine Schmelzenthalpie von 112 +/- 17 kJ/mol, vorzugsweise von 100 bis 125 kJ/mol und eine Erstarrungstemperatur von 138 bis 143 °C, vorzugsweise von 140 bis 142 °C aufweist.

Die Erfindung stellt auch ein Verfahren bereit zur Herstellung der oben genannten erfindungsgemäßen Pulver, wobei ein Polymer unter Einwirkung von Druck und/oder Temperatur zur Erzeugung einer zumindest teilweisen Lösung mit einem Medium enthaltend Lösungsmittel, das das Polymer löst, in Gegenwart von Glaspartikeln in Berührung gebracht wird und anschließend das Polymer aus der zumindest teilweisen Lösung ausgefällt wird, und Erhalten von Verbundpartikeln, die durch ganz oder teilweise mit einem gefällten Polymer beschichte Glaspartikel dargestellt werden, wobei die Glaspartikel einen mittleren Korndurchmesser d₅₀ von 3 bis 100 µm aufweisen.

Ein Vorteil des erfindungsgemäßen Verfahrens ergibt sich daraus, dass ein Arbeitsschritt bei der Herstellung des Pulvers eingespart wird, weil die Mischung von Polymerpartikeln und Hilfs-bzw. Füllpartikeln im Dry Blend nicht mehr notwendig ist.

In einem bevorzugten Verfahren sind die Glaspartikel ausgewählt aus Vollglaskugeln, Hohlglaskugeln, porösen Glaskugeln, Blähglaspartikeln, Glasfasern. Die jeweiligen Glaspartikel können in folgenden Formen ausgebildet sein: kugelförmig, plättchenförmig oder länglich. Darüber hinaus können die jeweiligen Glaspartikel scharfkantig, abgerundet oder glatt sein. Die genannten Glaspartikel können vor Auftrag des zu fällenden Polymers gegebenenfalls zusätzlich mit Schlichtemitteln beschichtet sein.

Weiterhin ist bevorzugt, dass die im Verfahren eingesetzten Glaspartikel ein Aspektverhältnis (d.h. ein Verhältnis von Länge zu Breite) von 20 oder weniger, vorzugsweise von 15 oder weniger, weiter bevorzugt von 10 oder weniger, noch weiter bevorzugt von 8 oder weniger, weiterhin bevorzugt von 5 oder weniger, besonders bevorzugt von 4 oder weniger, weiterhin besonders bevorzugt von 3 oder weniger, insbesondere bevorzugt von 2 oder weniger, weiter bevorzugt von 1,5 oder weniger und ganz besonders bevorzugt von 1,2 oder weniger aufweisen.

Das fällbare Polymer ist vorzugsweise ausgewählt aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid, AABB Polyamide oder Mischungen daraus, insbesondere Mischungen aus Homo- und Copolyamid. In einer anderen bevorzugten Ausführungsform werden AABB Polyamide in reiner Form ohne Mischung mit einem anderen Polymer verwendet.

In einer weiteren Ausführungsform wird das Polymer zur Beschichtung der Glaspartikel durch Fällung zumindest eines Polyamids des AABB-Types oder durch gemeinsame Fällung zumindest eines Polyamids des AB-Types und zumindest eines Polyamid des AABB-Types erhalten. Dabei sind cogefällte Polyamide bevorzugt, wobei zumindest Polyamid 11 oder Polyamid 12 und zumindest ein Polyamid auf der Basis von PA1010, PA1012, PA1212 oder PA1013 enthalten ist.

Die Art des Lösungsmittels und der Gehalt an Lösungsmittel, sowie die weiteren Parameter, um das entsprechende Polymer zu lösen und wieder zu fällen, hängen dabei vom Polymer ab, und sind bereits weiter oben erläutert worden.

Die folgenden Erläuterungen beziehen sich auf Polymere, die sich im alkoholischen Medium lösen lassen, insbesondere Polyamide. Für die Beschichtung von Glaspartikeln mit Polymeren, für die andere Lösungsmittel verwendet werden oder verwendet werden müssen, müssen die Parameter und Lösungsmittel entsprechend angepasst werden.

In bevorzugter Ausführungsform zeichnet sich das Verfahren der Erfindung dadurch aus, dass man eine Suspension einsetzt, erhältlich durch Suspendieren der Glaspartikel im Medium enthaltend das Polymer lösende Lösungsmittel, beispielsweise ein alkoholisches Medium, unter Einbringung eines Energieeintrages von größer als 1000 kJ/m³. Hierdurch entstehen im Allgemeinen schon sehr brauchbare Suspensionen der Partikel in dem Medium. Der angesprochene Energieeintrag lässt sich durch bekannte Aggregate bewerkstelligen. Geeignete Aggregate können sein: Planetenkneter, RotorStator-Maschinen, Rührwerkkugelmühle, Walzenstuhl und dergleichen.

Die für die Erfindung nützlichen Suspensionen werden in einem Medium erzeugt, enthaltend Lösungsmittel die das Polymer lösen, beispielsweise einem alkoholischen Medium. Im Falle eines alkoholischen Mediums kann es sich hierbei um einen reinen Alkohol, eine Mischung von mehreren Alkoholen oder auch um Alkohole mit einem Gehalt an Wasser oder anderen die erwünschte Umfällung der Polyamide im Wesentlichen nicht nachteilig beeinflussende Substanzen handeln. Das alkoholische Medium der Suspensionen weist bevorzugt einen Gehalt von kleiner als 50 Gew.-% nicht alkoholischer Substanzen (vorzugsweise Wasser), besonders bevorzugt weniger als 10 Gew.-% und besonders zweckmäßig weniger als 1 Gew.-% fremder nicht alkoholischer Substanzen auf. Für die Erfindung in Frage kommen generell alle Arten von Alkoholen oder Gemische davon, die eine Umfällung von Polymeren, vorzugsweise Polyamiden, unter den erwünschten Bedingungen (Druck und Temperatur) zulassen. Im Einzelfall ist es für den Fachmann ohne größeren Aufwand möglich das System an spezielle Erfordernisse anzupassen. Bevorzugt werden für das Verfahren der Erfindung als alkoholisches Medium für die Umfällung des Polyamids und/oder die Suspension der Glaspartikel ein oder mehrere Alkohole verwendet, die ein Zahlenverhältnis von Sauerstoffatomen zu Kohlenstoffatomen im Bereich von 1:1 bis 1:5 aufweisen.

Typische Alkohole zur Herstellung der Suspension der Glaspartikel sind solche mit einem Verhältnis von Sauerstoff zu Kohlenstoff von 1:1, 1:2, 1:3 , 1:4 und 1:5, bevorzugt solche mit einem Sauerstoff zu Kohlenstoffverhältnis von 1:2 und 1:3, besonders bevorzugt mit einem Sauerstoff zu Kohlenstoff-Verhältnis von 1:2. Ganz besonders zweckmäßig kommt Ethanol zum Einsatz bei der Herstellung einer Suspension der Glaspartikel sowie bei der Umfällung des fällbaren Polymers, vorzugsweise der Polyamide.

Wie oben erläutert ist das fällbare Polymer vorzugsweise ausgewählt aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid. Das fällbare Polyamid wird in einem entsprechenden Lösungsmittel gelöst, um es zur Beschichtung der Glaspartikel auf der Oberfläche derselben wieder auszufällen.

Bevorzugt werden als umfällbare Polymere Polyamide eingesetzt. Das fällbare Polymer ist vorzugsweise ein Polyamid, welches pro Carbonamid-Gruppe zumindest 8 Kohlenstoffatome aufweist. Besonders bevorzugt ist das Polymer ein Polyamid, welches 10 oder mehr Kohlenstoffatome pro Carbonamid-Gruppe aufweist. Bevorzugt als Ausgangsmaterial für das Verfahren der Erfindung einsetzbare Polyamide umfassen unter anderem Polyamid 11, Polyamid 12 und Polyamide mit mehr als 12 aliphatisch gebundenen Kohlenstoffatomen pro Carbonamidgruppe, vorzugsweise Polyamid 12. Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin(1,5), Octamethylendiamin(1, 8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,5 und 2,3 (gemessen in 0,5%iger m-Kresollösung bei 25°C nach DIN 53 727), bevorzugt zwischen 1,70 und 1,95, besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt. Das Einsatzpolyamid kann maximal 0,2 Gewichtsprozent H₃PO₄ enthalten. Bevorzugt wird H₃PO₄-freies Polyamid eingesetzt. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

Die Lösung der fällbaren Polymere, vorzugsweise der Polyamide, zur Umfällung kann auf alle bekannten Weisen hergestellt werden. Von Vorteil ist eine möglichst vollständige Lösung der fällbaren Polymere, vorzugsweise des Polyamids, im entsprechenden Medium, vorzugsweise einem alkoholischen Medium, in Gegenwart der darin suspendierten Glaspartikel. Die Lösung kann durch Einsatz von Druck und/oder Temperatur gefördert werden. Zweckmäßig geht man so vor, dass man das fällbare Polymer, vorzugsweise das Polyamid, im alkoholischen Medium vorlegt und unter Einwirkung von erhöhter Temperatur über die notwendige Zeit auflöst. Die Suspension der Glaspartikel kann vor, während oder nach dem Auflösen des fällbaren Polymers, vorzugsweise des Polyamids, zugegeben werden. Zweckmäßig wird die Suspension der Glaspartikel zugleich mit dem fällbaren Polymer, vorzugsweise mit dem Polyamid, vorgelegt. Der Auflösevorgang wird günstiger Weise durch den Einsatz angepasster Rühraggregate unterstützt. Die Ausfällung des fällbaren Polymers, vorzugsweise des Polyamids, kann ebenfalls durch Anwendung von Druck und/oder Temperatur unterstützt werden. So führen vorzugsweise eine Absenkung der Temperatur und/oder Abdestillierung (vorzugsweise unter vermindertem Druck) des Lösungsmittels, d.h. des alkoholischen Mediums, zur Fällung des fällbaren Polymers, vorzugsweise des Polyamids. Es ist jedoch auch möglich, die Fällung durch Zugabe eines anti-Lösungsmittels (Fällungsmittels) zu unterstützen.

In einem weiteren bevorzugten Verfahren wird nach Bildung der Verbundpartikel eine Nachbehandlung in einem Mischer mit starker Scherung durchgeführt. Dabei liegt die Temperatur besonders bevorzugt oberhalb des Glaspunktes des jeweiligen Polymeren. Diese Maßnahme dient dazu, das Korn abzurunden und die Rieselfähigkeit zu verbessern.

Die oben genannten Parameter werden wie folgt bestimmt:
Die BET-Oberfläche wurde nach DIN ISO 9277: 2003-05 mit einem Gasadsorptionsgerät der Fa. Micromeritics zur Bestimmung der spezifischen Oberfläche nach dem BET-Verfahren ermittelt (Micromeritics TriStar 3000 V6.03: V6.03 bezieht sich auf die Softwareversion der Software Win3000). Die BET-Oberfläche wurde mittels Gasadsorption von Stickstoff nach dem diskontinuierlichen volumetrischen Verfahren (DIN ISO 9277:2003-05, Kap 6.3.1.) bestimmt. Hierzu wurden mehrere (sieben) Messpunkte bei Relativdrücken P/P0 zwischen 0,05 und 0,20 bestimmt. Die Kalibrierung des Totvolumens erfolgte mittels He (Reinheit mind. 4,6 [99,996 %] laut Arbeitsanweisung, bzw. mindestens 4,0 [99,99 %] laut Norm; dies gilt auch für N₂). Die Proben wurden jeweils 1 Stunde bei Raumtemperatur (21°C) und 16 Stunden bei 80°C unter Vakuum entgast. Die spezifische Oberfläche wurde auf die entgaste Probe bezogen. Die Auswertung erfolgte mittels Mehrpunktbestimmung (DIN ISO 9277:2003-05, Kap 7.2). Die Temperatur während der Messung betrug 77 K.

Die Partikelgröße (Feinheit d₅₀) wurde mittels Laserbeugung bestimmt. Die Messungen wurden mit einem Malvern Mastersizer 2000 durchgeführt. Es handelt sich dabei um eine Trockenmessung. Für die Messung wurden jeweils 20-40 g Pulver mit Hilfe des Scirocco Trockendispergiergeräts zudosiert. Die Rüttelrinne wurde mit einer Zuführrate von 70% betrieben. Der Dispergierluftdruck betrug 3 bar. Bei jeder Messung erfolgte eine Hintergrundmessung (10 Sekunden / 10000 Einzelmessungen). Die Messzeit der Probe war 5 Sekunden (5000 Einzelmessungen). Der Brechungsindex, sowie der Blaulichtwert wurden auf 1,52 festgelegt. Zur Auswertung wurde die Mie-Theorie herangezogen.

Die Schüttdichte ergibt sich gemäß DIN EN ISO 60.

Der Partikelgehalt wird durch eine Asche/Glührückstandbestimmung nach DIN EN ISO 3451 Teil 1 und Teil 4 bestimmt.

Eine Bestimmung der Lösungsviskosität erfolgte in 0,5 %-iger meta-Kresol Lösung nach ISO 307.

Gegenstand der vorliegenden Erfindung sind auch Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei zumindest ein Pulver verwendet wird, das Verbundpartikel enthält, die ganz oder teilweise mit einem gefällten Polymer beschichtet sind, wobei die Glaspartikel einen mittleren Korndurchmesser d₅₀ von 3 bis 100 µm aufweisen.

Gegenstand der vorliegenden Erfindung sind auch Formkörper, die aus dem erfindungsgemäßen Pulver durch das vorgenannte Verfahren erhalten worden sind. Der so hergestellte Formkörper enthält dabei bzw. ein Polymer bzw. Polymere, die vorzugsweise ausgewählt sind aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid. In einer weiteren Ausführungsform ist das Polymer ein Polyamid des AABB-Types oder eine Mischung zumindest eines Polyamids des AB-Types und zumindest eines Polyamids des AABB-Types. Dabei sind Mischungen von Polyamiden bevorzugt, wobei zumindest Polyamid 11 oder Polyamid 12 und zumindest ein Polyamid auf der Basis von PA1010, PA1012, PA1212 oder PA1013 enthalten ist.

Vorteile bei diesem Verfahren unter Verwendung des erfindungsgemäßen Pulvers ergeben sich daraus, dass sich das Pulver nicht mehr entmischt, weniger Lunker im Bauteil entstehen, sowie aus der besseren Recyclebarkeit und die Bauteile eine gleichmäßige Qualität und gleichmäßigere mechanische Eigenschaften aufweisen, sowie dass eine scharfe Trennung zwischen geschmolzenen und nicht aufgeschmolzenen Bereichen besteht, und dass der Verzug der Bauteile gering ist.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Faserlaser, ein Heizstrahler oder eine Lampe sein, aber auch Kombinationen davon. Nach dem Abkühlen aller Schichten kann der Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers.

Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Die Formkörper, die durch ein schichtweise arbeitendes Verfahren, bei dem selektiv Bereiche aufgeschmolzen werden, hergestellt werden, zeichnen sich dadurch aus, dass sie zumindest ein Polymer sowie einen Verstärkungsstoff, aufweisen. Weiterhin wird die Verzugsneigung reduziert und eine Verbesserung bei der Reproduzierbarkeit der mechanischen Eigenschaften im Formkörper erzielt.

Die Formkörper können außerdem Hilfsstoffe (hier gelten die Angaben wie für das Polymerpulver), wie z. B. thermische Stabilisatoren, wie z. B. sterisch gehinderte Phenolderivate, aufweisen. Vorzugsweise weisen die Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in denen die Teile verwendet werden, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die Erfindung betrifft auch die Verwendung des erfindungsgemäßen Pulvers in einem Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei zumindest ein Pulver verwendet wird, das Verbundpartikel enthält, die ganz oder teilweise mit einem gefällten Polymer beschichtet sind, wobei die Glaspartikel einen mittleren Korndurchmesser d₅₀ von 3 bis 100 µm aufweisen.

Die folgenden Beispiele sollen das erfindungsgemäße Pulver sowie dessen Verwendung beschreiben, ohne die Erfindung auf die Beispiele einzuschränken. Die Messwerte der Schüttdichte wurde mit einer Apparatur nach DIN EN ISO 60 ermittelt.

### Beispiele

### Beispiel 1: Umfällung von Polyamid 12 (PA 12) (nicht erfindungsgemäß)

400 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH2 werden mit 2500 l Ethanol, vergällt mit 2-Butanon und 1 % Wassergehalt, innerhalb von 5 Stunden in einem 3 m³-Rührkessel (a = 160 cm) auf 145 °C gebracht und unter Rühren (Blattrührer, x = 80 cm, Drehzahl = 49 Upm) 1 Stunde bei dieser Temperatur belassen. Anschließend wurde die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von diesem Punkt an wurde bei gleicher Kühlrate die Manteltemperatur 2K - 3 K unter der Innentemperatur gehalten. Die Innentemperatur wurde mit gleicher Kühlrate auf 117 °C gebracht und dann 60 Minuten konstant gehalten. Danach wurde weiter bei einer Kühlrate von 40 K/h abdestilliert und so die Innentemperatur auf 111 °C gebracht wurde. Bei dieser Temperatur setzte die Fällung, erkennbar an der Wärmeentwicklung, ein. Die Destillationsgeschwindigkeit wurde soweit erhöht, dass die Innentemperatur nicht über 111,3 °C anstieg. Nach 25 Minuten fiel die Innentemperatur ab, was das Ende der Fällung anzeigte. Durch weiteres Abdestillieren und Kühlung über den Mantel wurde die Temperatur der Suspension auf 45 °C gebracht und die Suspension danach in einen Schaufeltrockner überführt. Das Ethanol wurde bei 70 °C/ 400 mbar abdestilliert und der Rückstand anschließend bei 20 mbar/86 °C für 3 Stunden nachgetrocknet.

Es wurde ein gefälltes PA 12 mit einem mittleren Korndurchmesser von 55 µm erhalten. Die Schüttdichte betrug 435g/l.

Analog dem in Beispiel 1 gezeigten Vorgehen oder nach DE 19708146 wurde ein Pulver mit Glaspartikeln als Kern und einer Hülle aus PA12, PA6.13, PA12/10.13, PA12/10.12, PA 10.12, PA10.10, PA6.12, PA10.13, PA6.18, PA12.18 hergestellt.

### Beispiel 2: Einstufige Umfällung von PA12 mit Glaspartikeln (erfindungsgemäß)

Es wurde entsprechend Beispiel 1 250 - 375 kg eines durch hydrolytische Polymerisation hergestelltes PA12 mit einer relativen Lösungsviskosität (ηᵣₑₗ) von 1,62 und einem Endgruppengehalt von 75 mmol/kg COOH, bzw. 66 mmol/kg NH₂ in Anwesenheit von 162,5 - 250 kg Glaspartikel mit den in Tabelle 1 dargestellten Kenndaten umgefällt. Die Ergebnisse und Parameter werden in Tabelle 2 zusammengefasst.

**Tabelle 1: Kenndaten der verschiedenen in den Beispielen 2 bis 5 verwendeten Glaspartikel:**

| **Glaspartikel** | **d₅₀** |
|---|---|
| Glasmehl | 20 µm |
| HGK (Hohlglaskugeln) | 17 µm |
| HGK Poraver | 40-60 µm |
| Glaskugeln c40-80 | 40-80 µm |
| Glaskugeln Typ6 | 5-6 µm |
| Glaskugeln Typ1 | 30-45 µm |
| Glaskugeln Typ1 <63 µm | <63 µm |
| Glaskugeln Typ1 30-50 µm | 30-50 µm |
| Glaskugeln Typ1 bis 30 µm | bis 30 µm |
| Glaskugeln Swarcoforce beschichtet und unbeschichtet* | 40-80 µm |
| Glasfasern MF 7982 | 14 µm; Länge: 210 µm |
| Glasfasern MF 7980 | 14 µm; Länge: 190 µm |

| | |
|---|---|
| * die Bezeichnung "beschichtet" bzw. "unbeschichtet" bezieht sich nicht auf das gefällte Polymer, sondern auf eine gesonderte Imprägnierung der Glaspartikel. | |

In diesem Beispiel wurden die Fällbedingungen gegenüber Beispiel 1 folgendermaßen abgeändert:
Fälltemperatur: 108 °C
Fällungszeit: 150 min
Rührerdrehzahl: 40 bis 77 Upm

Die Charakterisierung (Schüttdichte, Durchmesser und BET-Oberfläche) der gemäß Beispiel 2 hergestellten Pulver wird in Tabelle 2 zusammengefasst. Daneben gibt die Tabelle 2 auch die eingesetzten Mengen an Polyamid, Glaspartikel und Ethanol, sowie die bei dem Verfahren verwendete Rührerdrehzahl an.

**Tabelle 2: Charakterisierung der gemäß Beispiel 2 hergestellten Pulver**

| **RD Upm** | **SD g/L** | **d50 µm** | **BET m²/g** | **EtOH L** | **PA kg** | **Glaspartikel kg** |
|---|---|---|---|---|---|---|
| **Glasmehl in PA12** | | | | | | |
| 40 | 370-380 | 42 | 7,4 - 9,5 | 2500 | 375 | 206 |
| 40 | 310-320 | 46 - 53 | 10,6 - 9,9 | 2500 | 375 | 162,5 |
| 52 | 350-380 | 35 | 8 - 5,4 | 2500 | 348 | 232 |
| 65 | 400 | 35 | 4,6 | 2500 | 348 | 232 |
| | | | | | | |

| **HGK in PA12** | | | | | | |
|---|---|---|---|---|---|---|
| 40 | 246-378 | 39 | 12,8 - 11,4 | 2500 | 375 | 93,75 |
| 40 | 250 | 29 | 7,7 | 2500 | 348 | 150 |
| 40 | 243 | 24 | 9,1 | 2500 | 348 | 232 |
| 40 | 270 | 33 | 6,7 | 2500 | 348 | 116 |
| | | | | | | |

| **HGK Poraver in PA12** | | | | | | |
|---|---|---|---|---|---|---|
| 39 | 421 | 79 | 3,6 | 2500 | 348 | 232 |
| | | | | | | |

| **Glaskugeln c40-80 in PA12** | | | | | | |
|---|---|---|---|---|---|---|
| 66 | 424 | 76,1 | 10 | 2500 | 375 | 161 |
| 66 | 479 | 87 | 7,6 | 2500 | 250 | 167 |
| 66 | 549 | 93 | 6,9 | 2500 | 250 | 250 |
| | | | | | | |

| **Glaskugeln Typ 6 in PA12** | | | | | | |
|---|---|---|---|---|---|---|
| 77 | 404 | 27,3 | 6,4 | 2500 | 250 | 157 |
| | | | | | | |

| **Glaskugeln Typ 1 <63µm in PA12** | | | | | | |
|---|---|---|---|---|---|---|
| 39 | 442 | 84 | 4,8 | 2500 | 348 | 150 |
| 39 | 446 | 71 | 5 | 2500 | 348 | 232 |
| 39 | 455 | 60 | 4,4 | 2500 | 239 | 239 |
| 39 | 489 | 52 | 3,2 | 2500 | 195,5 | 293,5 |
| 39 | 531 | 41 | 2,6 | 2500 | 130 | 305 |
| 39 | 631 | 59 | 2,2 | 2500 | 78 | 313 |
| 39 | 641 | 39 | 1,9 | 2500 | 78 | 313 |
| 39 | 805 | 37 | 1,1 | 2500 | 35 | 313 |

| **Glaskugeln Typ 1 0-30 µm in PA12** | | | | | | |
|---|---|---|---|---|---|---|
| 39 | 425 | 51 | 4,1 | 2500 | 348 | 232 |

| **Glaskugeln Typ 1 <30-50 µm in PA12** | | | | | | |
|---|---|---|---|---|---|---|
| 44 | 486 | 63,8 | 4,7 | 2500 | 313 | 213 |
| 44 | 499 | 63,7 | 4,2 | 2500 | 313 | 213 |
| 44 | 471 | 64 | 5,1 | 2500 | 313 | 213 |
| 44 | 474 | 64 | 5,1 | 2500 | 313 | 213 |
| 39 | 495 | 83 | 4,1 | 2500 | 348 | 232 |
| 39 | 538 | 44 | 2,5 | 2500 | 130 | 305 |
| 39 | 638 | 38 | 1,7 | 2500 | 78 | 313 |
| 39 | 535 | 40 | 2,2 | 2500 | 130 | 305 |
| 39 | 626 | 40 | 1,9 | 2500 | 78 | 313 |
| | | | | | | |

| **Glasfasern MF 7982 in PA12** | | | | | | |
|---|---|---|---|---|---|---|
| 53 | 337 | 67 | 11,8 | 2500 | 375 | 100 |
| 53 | 325 | 67,3 | 14,2 | 2500 | 375 | 163 |
| 65 | 318 | 72 | 10 | 2500 | 348 | 232 |
| 39 | 327 | 71 | 6,5 | 2500 | 348 | 232 |
| | | | | | | |

| **Glasfasern MF 7980 in PA12** | | | | | | |
|---|---|---|---|---|---|---|
| 53 | 355 | 75 | 7,1 | 2500 | 375 | 94 |
| 53 | 352 | 74,7 | 7,5 | 2500 | 375 | 94 |
| 53 | 392 | 70 | 4,8 | 2500 | 375 | 44 |
| 53 | 382 | 77,5 | 7,7 | 2500 | 375 | 44 |
| | | | | | | |

| **Glaskugeln Swarcoforce 40-80 (unbeschichtet*) in PA12** | | | | | | |
|---|---|---|---|---|---|---|
| 39 | 392 | 89 | 5,9 | 2500 | 348 | 150 |
| 39 | 494 | 110 | 4,1 | 2500 | 348 | 232 |
| 39 | 540 | 108 | 4,1 | 2500 | 348 | 348 |
| | | | | | | |

| **Glaskugeln Swarcoforce 40-80 (c3 beschichtet*) in PA12** | | | | | | |
|---|---|---|---|---|---|---|
| 39 | 441 | 110 | 4,5 | 2500 | 348 | 150 |
| 39 | 474 | 109 | 4,7 | 2500 | 348 | 232 |
| 39 | 530 | 109 | 5,2 | 2500 | 348 | 348 |

| | | | | | | |
|---|---|---|---|---|---|---|
| RD= Rührerdrehzahl; SD=Schüttdichte * die Bezeichnung "beschichtet" bzw. "unbeschichtet" bezieht sich nicht auf das gefällte Polymer, sondern auf eine gesonderte Imprägnierung der Glaspartikel. Das Schlichtemittel für das eingesetzte Swarcoforce ist c-Aminopropyltriethoxysilan. | | | | | | |

### Beispiel 3: Einstufige Umfällung von PA6.13 mit Glaspartikeln (erfindungsgemäß)

Es wurde entsprechend Beispiel 1 228 - 292 kg eines durch hydrolytische Polymerisation hergestelltes PA6.13 mit einer relativen Lösungsviskosität (ηᵣₑₗ) von 1,81 und einem Endgruppengehalt von 11 mmol/kg COOH, bzw. 89 mmol/kg NH₂ in Anwesenheit von 40 - 157 kg Glaspartikel mit den in Tabelle 1 dargestellten Kenndaten umgefällt.

In diesem Beispiel wurden die Fällbedingungen gegenüber Beispiel 1 folgendermaßen abgeändert:
Fälltemperatur: 121 °C
Fällungszeit: 150 min
Rührerdrehzahl: 52-53 Upm

Die Charakterisierung (Schüttdichte, Durchmesser und BET-Oberfläche) der gemäß Beispiel 3 hergestellten Pulver wird in Tabelle 3 zusammengefasst. Daneben gibt die Tabelle 3 auch die eingesetzten Mengen an Polyamid, Glaspartikel und Ethanol, sowie die bei dem Verfahren verwendete Rührerdrehzahl an.

**Tabelle 3: Charakterisierung der gemäß Beispiel 3 hergestellten Pulver**

| **RD Upm** | **SD g/L** | **d50 µm** | **BET m²/g** | **EtOH L** | **PA kg** | **Glaspartikel kg** |
|---|---|---|---|---|---|---|
| **Quarzglasmehl in PA6.13** | | | | | | |
| 53 | 349 | 62 | 13,9 | 2500 | 292 | 125 |
| 52 | 401 | 56 | 5,2 | 2500 | 228 | 99 |
| 52 | 405 | 54 | 5,8 | 2500 | 228 | 123 |
| | | | | | | |

| **HGK in PA6.13** | | | | | | |
|---|---|---|---|---|---|---|
| 52 | 341 | 60 | 4,3 | 2500 | 228 | 40 |
| 52 | 327 | 53 | 4,1 | 2500 | 228 | 57 |
| | | | | | | |

| **Glaskugeln Typ 1 <63µm in PA6.13** | | | | | | |
|---|---|---|---|---|---|---|
| 53 | 436 | 59 | 3,4 | 2500 | 292 | 157 |
| | | | | | | |

| **Glaskugeln Typ 1 <63µm und Quarzglasmehl in PA6.13** | | | | | | |
|---|---|---|---|---|---|---|
| 53 | 438 | 64 | 5,0 | 2500 | 292 | 62,5/62,5 |

| | | | | | | |
|---|---|---|---|---|---|---|
| RD= Rührerdrehzahl; SD=Schüttdichte | | | | | | |

### Beispiel 4: Einstufige Umfällung von PA12/10.13 mit Glaspartikeln (erfindungsgemäß)

Es wurde entsprechend Beispiel 1 39 - 156 kg eines durch hydrolytische Polymerisation hergestelltes PA12 mit einer relativen Lösungsviskosität (ηᵣₑₗ) von 1,87 und einem Endgruppengehalt von 2 mmol/kg COOH, bzw. 79 mmol/kg NH₂ sowie 39-152 kg eines durch hydrolytische Polymerisation hergestelltes PA10.13 mit einer relativen Lösungsviskosität (ηᵣₑₗ) von 1,82 und einem Endgruppengehalt von 10 mmol/kg COOH, bzw. 119 mmol/kg NH₂ in Anwesenheit von 213 - 313 kg Glaspartikel mit den in Tabelle 1 dargestellten Kenndaten umgefällt.

In diesem Beispiel wurden die Fällbedingungen gegenüber Beispiel 1 folgendermaßen abgeändert:
Fälltemperatur: 102 °C
Fällungszeit: 150 min
Rührerdrehzahl: 39 Upm

Die Charakterisierung (Schüttdichte, Durchmesser und BET-Oberfläche) der gemäß Beispiel 4 hergestellten Pulver wird in Tabelle 4 zusammengefasst. Daneben gibt die Tabelle 4 auch die eingesetzten Mengen an Polyamid, Glaspartikel und Ethanol, sowie die bei dem Verfahren verwendete Rührerdrehzahl an.

**Tabelle 4: Charakterisierung der gemäß Beispiel 4 hergestellten Pulver**

| **RD Upm** | **SD g/L** | **d50 µm** | **BET m²/g** | **EtOH L** | **PA kg** | **Glaspartikel kg** |
|---|---|---|---|---|---|---|
| **Glaskugeln Typ 1 30-50 µm in PA12/10.13** | | | | | | |
| 39 | 654 | 72 | 2,9 | 2500 | 65/65 | 313 |
| 39 | 724 | 51 | 4,5 | 2500 | 39/39 | 305 |
| | | | | | | |

| **Glaskugeln Typ 1 <63 µm in PA12/10.13** | | | | | | |
|---|---|---|---|---|---|---|
| 66 | 554-533 | 60-62,7 | 4,1-7,9 | 2500 | 156/156 | 213 |

| | | | | | | |
|---|---|---|---|---|---|---|
| RD= Rührerdrehzahl; SD=Schüttdichte | | | | | | |

### Beispiel 5: Einstufige Umfällung von PA12/10.12 mit Glaspartikeln (erfindungsgemäß)

Es wurde entsprechend Beispiel 1 286 - 313 kg eines durch hydrolytische Polymerisation hergestelltes PA12/10.12 mit einer relativen Lösungsviskosität (ηᵣₑₗ) von 1,82 und einem Endgruppengehalt von 71 mmol/kg COOH, bzw. 35 mmol/kg NH₂ in Anwesenheit von 154 - 234 kg Glaspartikel mit den in Tabelle 1 dargestellten Kenndaten umgefällt.

In diesem Beispiel wurden die Fällbedingungen gegenüber Beispiel 1 folgendermaßen abgeändert:
Fälltemperatur: 103 °C
Fällungszeit: 135-145 min
Rührerdrehzahl: 39-53 Upm

Die Charakterisierung (Schüttdichte, Durchmesser und BET-Oberfläche) der gemäß Beispiel 5 hergestellten Pulver wird in Tabelle 5 zusammengefasst. Daneben gibt die Tabelle 5 auch die eingesetzten Mengen an Polyamid, Glaspartikel und Ethanol, sowie die bei dem Verfahren verwendete Rührerdrehzahl an.

**Tabelle 5: Charakterisierung der gemäß Beispiel 5 hergestellten Pulver**

| **RD Upm** | **SD g/L** | **d50 µm** | **BET m²/g** | **EtOH L** | **PA kg** | **Glaspartikel kg** |
|---|---|---|---|---|---|---|
| **Glaskugeln Typ 1 <63µm in PA12/10.12** | | | | | | |
| 53 | 477 | 46,8 | 2,9 | 2500 | 313 | 213 |
| 39 | 503 | 118 | | 2500 | 286 | 154 |
| 39 | 501 | 107 | 3,3 | 2500 | 286 | 190 |
| 39 | 517 | 99 | 2,9 | 2500 | 286 | 234 |

| | | | | | | |
|---|---|---|---|---|---|---|
| RD= Rührerdrehzahl; SD=Schüttdichte | | | | | | |

## Patentansprüche

1. Pulver zur Verwendung in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, enthaltend Verbundpartikel, die von ganz oder teilweise mit einem gefällten Polymer beschichten Glaspartikeln dargestellt werden, wobei die Glaspartikel einen mittleren Korndurchmesser d₅₀ von 3 bis 100 µm, bestimmt mittels Laserbeugung, aufweisen.

2. Das Pulver nach Anspruch 1, **dadurch gekennzeichnet, dass** die Glaspartikel ausgewählt sind aus Vollglaskugeln, Hohlglaskugeln, porösen Glaskugeln, Blähglaspartikeln, wobei die genannten Glaspartikel vor Auftrag des zu fällenden Polymers gegebenenfalls zusätzlich mit Schlichtemitteln beschichtet sein können.

3. Das Pulver nach Anspruch 1 oder 2, **dadurch gekennzeichnet, dass** das fällbare Polymer ausgewählt ist aus Polyolefine, Polyethylen, Polypropylen, Polyvinylchlorid, Polyacetal, Polystyrol, Polyimide, Polysulfone, Poly-(N-methylmethacrylimide) (PMMI), Polymethylmethacrylat (PMMA), Polyvinylidenflouride (PVDF), lonomer, Polyetherketone, Polyaryletherketone, Polyamid, Copolyamid oder Mischungen daraus.

4. Das Pulver nach irgend einem der Ansprüche 1 bis 3, **dadurch gekennzeichnet, dass** die Glaspartikel einen mittleren Korndurchmesser d50 von 3 bis 80 µm, bestimmt mittels Laserbeugung, aufweisen.

5. Das Pulver nach irgend einem der Ansprüche 1 bis 4, **dadurch gekennzeichnet, dass** die Verbundpartikel einen mittleren Korndurchmesser d50 von 20 bis 150 µm, bestimmt mittels Laserbeugung, aufweisen.

6. Das Pulver nach irgend einem der Ansprüche 1 bis 5, **dadurch gekennzeichnet, dass** das gewichtsbezogene Verhältnis des Polymers zu den Glaspartikeln bezogen auf die Gesamtheit der Verbundpartikel von 0,1 bis 30 beträgt.

7. Das Pulver nach irgend einem der Ansprüche 1 bis 6, **dadurch gekennzeichnet, dass** das Verhältnis des mittleren Korndurchmessers d50 der Verbundpartikel zum mittleren Korndurchmesser d50 der Glaspartikel von 1,01 bis 5,0, bestimmt mittels Laserbeugung, beträgt.

8. Das Pulver nach irgend einem der Ansprüche 1 bis 7, **dadurch gekennzeichnet, dass** die Dichte der Glaspartikel größer ist oder nicht mehr als 20% geringer ist als die Dichte des für die Fällung des Polymers verwendeten Lösungsmittels.

9. Das Pulver nach irgend einem der Ansprüche 1 bis 7, **dadurch gekennzeichnet, dass** die Dichte der Glaspartikel größer ist oder nicht mehr als 20% geringer ist als die Dichte von Ethanol.

10. Das Pulver nach irgend einem der Ansprüche 1 bis 9, **dadurch gekennzeichnet, dass** der Anteil der Verbundpartikel im Pulver mindestens 50 Gew.-% beträgt.

11. Das Pulver nach irgend einem der Ansprüche 1 bis 10, **dadurch gekennzeichnet, dass** der Schmelzpunkt der polymeren Komponente beim ersten Aufheizen um 3-7% größer ist als beim zweiten Aufheizen, gemessen durch Differentialscanningkalorimetrie (DSC).

12. Das Pulver nach irgend einem der Ansprüche 1 bis 10, **dadurch gekennzeichnet, dass** die Schmelzenthalpie der polymeren Komponente beim ersten Aufheizen um mindestens 50% größer ist als beim zweiten Aufheizen, gemessen durch Differentialscanningkalorimetrie (DSC).

13. Verfahren zur Herstellung von Pulvern, insbesondere wie in irgend einem der Ansprüche 1 bis 12 definiert, wobei ein Polymer unter Einwirkung von Druck und/oder Temperatur zur Erzeugung einer zumindest teilweisen Lösung mit einem Medium enthaltend Lösungsmittel, das das Polymer löst, in Gegenwart von Glaspartikeln in Berührung gebracht wird und anschließend das Polymer aus der zumindest teilweisen Lösung ausgefällt wird, und Erhalten von Verbundpartikeln, die durch ganz oder teilweise mit einem gefällten Polymer beschichte Glaspartikel dargestellt werden, wobei die Glaspartikel einen mittleren Korndurchmesser d50 von 3 bis 100 µm, bestimmt mittels Laserbeugung, aufweisen.

14. Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei ein Pulver nach mindestens einem der Ansprüche 1 bis 12 verwendet wird.

15. Verwendung des Pulvers gemäß irgend einem der Ansprüche 1 bis 12 in einem Verfahren gemäß Anspruch 14.

16. Formkörper, der durch das Verfahren nach Anspruch 14 unter Verwendung des Pulvers nach irgend einem der Ansprüche 1 bis 12 erhalten worden ist.

17. Pulver erhältlich nach einem Verfahren gemäß Anspruch 13.

## Claims

1. Powder for use in a layer-by-layer process for producing mouldings by selectively melting regions of the respective powder layer through introduction of electromagnetic energy, comprising composite particles which are provided by glass particles entirely or partially coated with a precipitate polymer, where the d₅₀ median diameter of the glass particles is from 3 to 100 µm, determined by means of laser scattering.

2. Powder according to Claim 1, **characterized in that** the glass particles have been selected from solid glass beads, hollow glass beads, porous glass beads, and foamed glass particles, where the glass particles mentioned can optionally also have been coated with sizes prior to application of the polymer to be precipitated.

3. Powder according to Claim 1 or 2, **characterized in that** the precipitatable polymer has been selected from polyolefins, polyethylene, polypropylene, polyvinylchloride, polyacetal, polystyrene, polyimides, polysulphones, poly(N-methylmethacrylimides) (PMMI), polymethyl methacrylate (PMMA), polyvinylidene fluorides (PVDF), ionomer, polyether ketones, polyaryl ether ketones, polyamide, copolyamide and mixtures thereof.

4. Powder according to any one of Claims 1 to 3, **characterized in that** the d₅₀ median diameter of the glass particles is from 3 to 80 µm, determined by means of laser scattering.

5. Powder according to any one of Claims 1 to 4, **characterized in that** the d₅₀ median diameter of the composite particles is from 20 to 150 µm, determined by means of laser scattering.

6. Powder according to any one of Claims 1 to 5, **characterized in that** the ratio by weight of the polymer to the glass particles, based on the entirety of the composite particles, is from 0.1 to 30.

7. Powder according to any one of Claims 1 to 6, **characterized in that** the ratio of the d50 median diameter of the composite particles to the d₅₀ median diameter of the glass particles is from 1.01 to 5.0, determined by means of laser scattering.

8. Powder according to any one of Claims 1 to 7, **characterized in that** the density of the glass particles is greater or not more than 20% smaller than the density of the solvent used for the precipitation of the polymer.

9. Powder according to any one of Claims 1 to 7, **characterized in that** the density of the glass particles is greater or not more than 20% smaller than the density of ethanol.

10. Powder according to any one of Claims 1 to 9, **characterized in that** the proportion of the composite particles in the powder is at least 50% by weight.

11. Powder according to any one of Claims 1 to 10, **characterized in that** the melting point of the polymeric component during the first heating procedure is higher by from 3 to 7% than during the second heating procedure, when measured by differential scanning calorimetry (DSC).

12. Powder according to any one of Claims 1 to 10, **characterized in that** the enthalpy of fusion of the polymeric component during the first heating procedure is at least 50% higher than during the second heating procedure, when measured by differential scanning calorimetry (DSC).

13. Process for producing powders, in particular as defined in any one of Claims 1 to 12, where, in order to produce an at least partial solution, a polymer is brought into contact, in the presence of glass particles, with exposure to pressure and/or heat, with a medium comprising solvent which dissolves the polymer, and then the polymer is precipitated from the at least partial solution, and composite particles are obtained which are provided by glass particles coated entirely or partially with a precipitated polymer, where the d₅₀ median diameter of the glass particles is from 3 to 100 µm, determined by means of laser scattering.

14. Process for producing mouldings by a layer-by-layer process, by selectively melting regions of the respective powder layer through the introduction of electromagnetic energy, where the selectivity is achieved by applying susceptors, inhibitors or absorbers or by masks, where a powder according to at least one of Claims 1 to 12 is used.

15. Use of the powder according to any one of Claims 1 to 12 in a process according to Claim 14.

16. Moulding obtained by the process according to Claim 14 with use of the powder according to any one of Claims 1 to 12.

17. Powder obtainable by a process according to Claim 13.

## Revendications

1. Poudre destinée à une utilisation dans un procédé fonctionnant en couches pour la fabrication de corps moulés, selon lequel des zones de la couche de poudre en question sont fondues sélectivement par l'apport d'énergie électromagnétique, contenant des particules composites, qui sont des particules de verre revêtues en totalité ou en partie avec un polymère précipité, les particules de verre présentant un diamètre de particule moyen d₅₀ de 3 à 100 µm, déterminé par diffraction laser.

2. Poudre selon la revendication 1, **caractérisée en ce que** les particules de verre sont choisies parmi les billes de verre pleines, les billes de verre creuses, les billes de verre poreuses, les billes de verre expansées, les particules de verre mentionnées pouvant éventuellement également être revêtues avec des agents d'encollage avant l'application du polymère à précipiter.

3. Poudre selon la revendication 1 ou 2, **caractérisée en ce que** le polymère pouvant être précipité est choisi parmi les polyoléfines, le polyéthylène, le polypropylène, le polychlorure de vinyle, le polyacétal, le polystyrène, les polyimides, les polysulfones, les poly-(N-méthylméthacrylimides) (PMMI), le polyméthacrylate de méthyle (PMMA), les polyfluorures de vinylidène (PVDF), les ionomères, les polyéther-cétones, les polyaryléther-cétones, le polyamide, le copolyamide ou leurs mélanges.

4. Poudre selon l'une quelconque des revendications 1 à 3, **caractérisée en ce que** les particules de verre présentent un diamètre de particule moyen d50 de 3 à 80 µm, déterminé par diffraction laser.

5. Poudre selon l'une quelconque des revendications 1 à 4, **caractérisée en ce que** les particules composites présentent un diamètre de particule moyen d50 de 20 à 150 µm, déterminé par diffraction laser.

6. Poudre selon l'une quelconque des revendications 1 à 5, **caractérisée en ce que** le rapport en poids entre le polymère et les particules de verre, par rapport à la totalité des particules composites, est de 0,1 à 30.

7. Poudre selon l'une quelconque des revendications 1 à 6, **caractérisée en ce que** le rapport entre le diamètre de particule moyen d50 des particules composites et le diamètre de particule moyen d50 des particules de verre est de 1,01 à 5,0, déterminé par diffraction laser.

8. Poudre selon l'une quelconque des revendications 1 à 7, **caractérisée en ce que** la densité des particules de verre est supérieure ou n'est pas plus de 20 % inférieure à la densité du solvant utilisé pour la précipitation du polymère.

9. Poudre selon l'une quelconque des revendications 1 à 7, **caractérisée en ce que** la densité des particules de verre est supérieure ou n'est pas plus de 20 % inférieure à la densité de l'éthanol.

10. Poudre selon l'une quelconque des revendications 1 à 9, **caractérisée en ce que** la proportion des particules composites dans la poudre est d'au moins 50 % en poids.

11. Poudre selon l'une quelconque des revendications 1 à 10, **caractérisée en ce que** le point de fusion du composant polymère lors du premier chauffage est 3 à 7 % supérieur à celui lors du deuxième chauffage, mesuré par calorimétrie à balayage différentiel (DSC).

12. Poudre selon l'une quelconque des revendications 1 à 10, **caractérisée en ce que** l'enthalpie de fusion du composant polymère lors du premier chauffage est au moins 50 % supérieure à celle lors du deuxième chauffage, mesurée par calorimétrie à balayage différentiel (DSC).

13. Procédé de fabrication de poudres, notamment telles que définies dans l'une quelconque des revendications 1 à 12, selon lequel un polymère est mis en contact avec un milieu contenant un solvant qui dissous le polymère sous l'effet de la pression et/ou de la température pour la formation d'une solution au moins partielle, en présence de particules de verre, puis le polymère est précipité à partir de la solution au moins partielle, et des particules composites sont obtenues, qui sont des particules de verre revêtues en totalité ou en partie avec un polymère précipité, les particules de verre présentant un diamètre de particule moyen d50 de 3 à 100 µm, déterminé par diffraction laser.

14. Procédé de fabrication de corps moulés par un procédé fonctionnant en couches, selon lequel des zones de la couche de poudre en question sont fondues sélectivement par l'apport d'énergie électromagnétique, la sélectivité étant obtenue par l'application de suscepteurs, d'inhibiteurs, d'absorbants ou par masquage, une poudre selon au moins l'une quelconque des revendications 1 à 12 étant utilisée.

15. Utilisation de la poudre selon l'une quelconque des revendications 1 à 12 dans un procédé selon la revendication 14.

16. Corps moulé, qui a été obtenu par le procédé selon la revendication 14 en utilisant la poudre selon l'une quelconque des revendications 1 à 12.

17. Poudre pouvant être obtenue par un procédé selon la revendication 13.
